# EUROPÄISCHE PATENTANMELDUNG

(11) **EP 1 288 860 A1**
(43) Veröffentlichungstag der Anmeldung: **05.03.2003**
(21) Anmeldenummer: 01121103.4
(22) Anmeldetag: 03.09.2001
(51) Int. Cl.: G06T 7/00

(54) **Verfahren zur Verarbeitung digitaler fotografischer Bilddaten, welches ein Verfahren zum automatischen Erkennen von rote-Augen-Defekten umfasst**

(71) Anmelder: Agfa-Gevaert AG, 51373 Leverkusen (DE)
(72) Erfinder: Meckes, Günter, 81447 München (DE); Damm, Tobias, 81545 München (DE); Fürsich, Manfred, 82024 Taufkirchen (DE); Oberhardt, Knut, 83607 Föching (DE); Hartmann, Klaus, 86938 Schondorf (DE); Schuhrke, Thomas, 81549 München (DE); Taresch, Gudrun, 80337 München (DE)

(57) **Zusammenfassung**

Die Erfindung betrifft ein Verfahren zur Verarbeitung digitaler, fotografischer Bilddaten, wobei auf die Bilddaten ein Verfahren zum automatischen Erkennen von rote-Augen-Defekten angewandt wird. Bevor die Bilddaten einem aufwändigen Verfahren zum Erkennen roter-Augen-Defekte unterzogen werden werden in Rahmen eines Ausschlussverfahrens Ausschlusskriterien überprüft, anhand derer das Auftreten von rote-Augen-Defekte definitiv ausgeschlossen wird. Falls derartige Ausschlusskriterien erfüllt sind wird das rote-Augen-Erkennungsverfahren nicht durchgeführt.

## Beschreibung

Die Erfindung betrifft ein Verfahren zur Verarbeitung digitaler fotografischer Bilddaten nach dem Oberbegriff von Anspruch 1.

Derartige Verfahren sind aus verschiedenen Anmeldungen bekannt.

Zur Detektion roter Augen existieren beispielsweise halbautomatische Programme, bei denen der Benutzer bei einem am PC dargestellten Bild eine Region markieren muss, in der die roten Augen enthalten sind. Innerhalb dieser markierten Region werden dann die roten Fehlstellen automatisch erkannt, eine Korrekturfarbe, welche zur Helligkeit des Auges passt, wird zugewiesen und die Korrektur automatisch durchgeführt.

Derartige Verfahren sind jedoch für automatische Kopiergeräte nicht geeignet, da an diesen viele Bilder sehr schnell nacheinander bearbeitet werden müssen und keine Zeit ist, jedes einzelne Bild vom Benutzer anschauen und evtl. markieren zu lassen.

Aus diesem Grund wurden für die Verwendung in automatischen Kopiergeräten bereits vollautomatische Verfahren entwickelt.

So beschreibt beispielsweise die EP 0961225 ein Programm zum Erkennen roter Augen in digitalen Bildern, welches mehrere Schritte umfasst. Hier werden zunächst Gebiete detektiert, welche Hauttöne aufweisen. Der nächste Schritt besteht darin, Ellipsen in diese detektierten Regionen mit Hauttönen einzupassen. Nur Regionen, in die derartige Ellipsen eingepasst werden können, werden im weiteren Verlauf als Kandidatenregionen für rote Augen betrachtet. Innerhalb dieser Regionen werden dann zwei rote-Augen-Kandidaten gesucht, deren Abstand - sobald sie ermittelt wurden - mit dem Abstand von Augen verglichen wird. Die als mögliche Augen detektierten Gebiete um die roten-Augen-Kandidaten werden nun mit Augentemplates verglichen, um zu verifizieren, dass es sich dabei tatsächlich um Augen handelt. Falls auch die letzten beiden Kriterien erfüllt sind, wird davon ausgegangen, dass rote Augen gefunden wurden. Anschließend werden diese roten Augen korrigiert.

Nachteilig an den bekannten automatischen rote-Augen-Erkennungsverfahren ist, dass sie alle zu kopierenden Bilder auf rote-Augen-Defekte hin untersuchen, was sehr zeitaufwändig ist. Damit wird die Leistung von Kopiergeräten, welche derartige Verfahren verwenden, deutlich reduziert.

Aufgabe der Erfindung war es deshalb, ein Verfahren zur Verarbeitung digitaler fotografischer Bilddaten, welches ein Verfahren zur automatischen Erkennung von rote-Augen-Defekten umfasst, zu entwickeln, das eine mögichst schnelle Bearbeitung der Bilder zulässt, so dass die Kopierleistung der fotografischen Kopiergeräte nicht herabgesetzt wird.

Gelöst wird die Aufgabe gemäß der Erfindung durch ein Verfahren mit den Merkmalen von Anspruch 1. Weitere vorteilhafte Ausführungsformen sind Bestandteil der Unteransprüche im Zusammenhang mit der Beschreibung und den Zeichnungen.

Erfindungsgemäß wird dem Verfahren zum Erkennen roter-Augen-Defekte ein Ausschlussverfahren vorgeschaltet, welches dazu dient, Bilder auszusortieren, welche definitiv keine roten-Augen-Defekte aufweisen. Dies geschieht dadurch, dass die Bilddaten auf Ausschlusskriterien hin überprüft werden, bei deren Vorliegen davon ausgegangen werden kann, dass sich entweder keine Personen auf der Aufnahme befinden oder dass bei der Aufnahme des Bildes das Licht eines Kamerablitzes sicher nicht die dominante Lichtquelle war bzw. dass überhaupt kein Blitzlicht verwendet wurde. Da in Bildern, in denen entweder keine Augen vorkommen oder kein Blitzlicht verwendet wurde, welches sich am Augenhintergrund spiegeln könnte, sicher keine roten-Augen-Defekte auftreten, wäre es überflüssig, solche Bilddaten einem Verfahren zum Erkennen roter-Augen-Defekte zu unterziehen. Durch das Aussortieren dieser Bilder vor Anwendung des rote-Augen-Erkennungsverfahrens kann viel Rechenzeit gespart werden.

Besonders vorteilhaft ist es, Ausschlusskriterien bereits an den bei der Bildaufnahme abgespeicherten oder auf dem Film vorhandenen Filmzusatzdaten zu überprüfen. Diese sind sehr schnell erfassbar und können einfach analysiert werden, ohne dass eine Überprüfung der eigentlichen Bildinhaltsdaten notwendig ist. Bilder bereits aufgrund der Filmzusatzdaten von dem Erkennungsverfahren für rote-Augen-Defekte auszuschließen, ist am eindeutigsten und effizientesten und kann sehr viel Rechenzeit sparen.

Mittels der Filmzusatzdaten läßt sich bei manchen Filmen das Fehlen eines Blitzlichts bei der Aufnahme anhand des beim Aufnehmen von der Kamera gesetzten Blitzmarkers feststellen. Diese Marker können von APS oder digitalen Kameras gesetzt werden und zeigen an, ob ein Blitz verwendet wurde oder nicht. Falls ein Blitzmarker gesetzt wurde, der besagt, dass bei der Aufnahme kein Blitz verwendet wurde, kann mit großer Sicherheit davon ausgegangen werden, dass keine roten-Augen-Defekte im Bild auftreten. Alle Bilder mit einem derartigen Blitzmarker werden vor Anwendung des Verfahrens zur rote-Augen-Defekterkennung aussortiert, das Defekterkennungsverfahren wird bei ihrer Bearbeitung übersprungen, weitere Bildverarbeitungsverfahren können sofort nach dem Ausschluss begonnen werden.

Ein weiteres Ausschlusskriterium, bei dem anhand der Filmzusatzdaten sofort festgestellt wird, dass sich auf dem Bild keine roten-Augen-Defekte finden lassen, ist das Vorliegen eines Schwarzweißfilms. Dieser Sachverhalt lässt sich am DX-Code des Films ablesen. Bei Schwarzweißfilmen können zwar ähnliche Lichtreflexe innerhalb der Augen auftreten, ein rote-Augen-Defektprogramm, welches wie üblich die Defekte unter Einbeziehen von Kriterien wie Hauttonerkennung oder rote-Flächen-Erkennung etc. überprüft, wird derartige Lichtreflexe aber niemals detektieren können. Aus diesem Grunde macht es keinen Sinn, das rote-Augen-Defekterkennungsprogramm auf Schwarzweißbilder anzuwenden. Dies wäre nur eine Vergeudung von Rechenzeit. Aus diesem Grund ist es sinnvoll, bei den gängigen Verfahren Schwarzweißbilder von vornherein auszuschließen und keine roten-Augen-Defekte zu suchen, sondern weitere Bildverarbeitungsverfahren sofort zu starten. Wird dagegen ein Verfahren zum Erkennen roter-Augen-Defekte verwendet, welches allein mit Graustufendichteprofilen arbeitet, wäre es möglich, derartige Lichtreflexe auch in Schwarzweißbildern zu erkennen, und es wäre nicht sinnvoll, dieses Ausschlusskriterium zu verwenden. In der Regel kommt dies aber nicht vor.

Eine weitere, vorteilhafte Methode ist es, Ausschlusskriterien anhand eines Bilddatensatzes zu überprüfen, der gegenüber dem im Verfahren zum Erkennen roter-Augen-Defekte verwendeten Bilddatensatz reduziert ist. Für die Überprüfung von Ausschlusskriterien sind diese reduzierten Datensätze oftmals ausreichend, ihre Überprüfung kann deutlich schneller erfolgen als die Überprüfung des vollständigen Datensatzes. Ein reduzierter Datensatz kann beispielsweise darin bestehen, dass die Auflösung der Bilddaten niedriger ist.

Auch die Analyse, die zur Feststellung erfolgt, ob Blitzlicht verwendet wurde, kann anhand von niedrig aufgelösten Daten vorgenommen werden. Üblicherweise wird beim Abtasten fotografischer Vorlagen vor dem eigentlichen Abtastvorgang, der die Bilddaten ergibt, ein Prescan durchgeführt, welcher eine Auswahl dieser Bilddaten in viel geringerer Auflösung ermittelt. Diese Prescandaten werden hauptsächlich dazu verwendet, die Empfindlichkeit des Aufnahmesensors für die Hauptabtastung optimal einzustellen. Sie bieten sich jedoch auch für das Ausschlussverfahren an.

Diese niedrig aufgelösten Daten sind vorteilhaft für die Überprüfung der Ausschlusskriterien, da ihre Analyse aufgrund des geringen Datensatzes nicht viel Zeit in Anspruch nimmt. Falls nur eine Abtastung der Bilder erfolgt oder nur hoch aufgelöste, digitale Daten vorliegen, ist es vorteilhaft, diese zum Überprüfen der Ausschlusskriterien zu nieder aufgelösten Daten zusammenzufassen. Dies kann durch Rasterung, Mittelwertbildung oder eine Pixelauswahl geschehen.

Eine Datenreduktion für das Ausschlussverfahren kann allerdings auch darin bestehen, ein Graustufenbild der Bilddaten bereitzustellen. Hier kann eine gegenüber den Printstufen deutlich reduzierte Anzahl an Graustufen ausreichend sein, um Ausschlusskriterien zu überprüfen. Auch damit wird der Datensatz gegenüber farbigen Bildern bzw. Mehrfarbbildern deutlich reduziert. Ein derartiges Graustufenbild kann vorzugsweise auch durch Rasterung entstehen, wobei ein gröberes Raster gewählt werden kann und damit zusätzlich zur Farbabstufung auch die Auflösung des Bildes reduziert wird.

Bei Ausschlusskriterien, über die nur die Aussage getroffen werden kann, dass sie mit einer bestimmten Wahrscheinlichkeit zutreffen oder nicht, aber keine hundertprozentige Aussage möglich ist, ist es vorteilhaft, mehrere dieser Ausschlusskriterien unabhängig voneinander zu überprüfen und die Ergebnisse für die einzelnen Ausschlusskriterien zu einer Gesamtausschlussbewertung zusammenzufassen. Dieses Zusammenfassen kann unter einer Wichtung der einzelnen Kriterien erfolgen oder auch anhand eines neuronalen Netzes durchgeführt werden.

Besonders vorteilhaft ist es, mehrere Ausschlusskriterien parallel zu überprüfen. Durch das parallele Überprüfen kann viel Rechenzeit gespart werden.

Ein besonders aussagekräftiges Kriterium, das - wie bereits erwähnt - als Ausschlusskriterium dient, ist die Verwendung von Blitzlicht bei der Aufnahme des Bildes. Da es überhaupt nur zu rote-Augen-Defekten im Bild kommt, falls bei einer Personenaufnahme das Licht des Blitzes am Augenhintergrund gespiegelt wird, ist dies ein sehr sicheres Kriterium. Direkt läßt sich das Fehlen eines Blitzes bei einer Aufnahme jedoch nur feststellen, wenn mittels der Kamera beim Aufnehmen des Bildes sog. Blitzmarker gesetzt wurden.

Bei der Mehrzahl der Bilder, bei denen jedoch kein derartiger Blitzmarker gesetzt wurde, kann nur indirekt darauf geschlossen werden, ob eine Blitzaufnahme vorliegt oder nicht. Dies ist beispielsweise anhand einer Bildanalyse feststellbar. In dieser können starke Schatten von Personen am Hintergrund gesucht werden, deren Kontur mit der Kontur des Gesichts übereinstimmt, deren Fläche jedoch eine andere Farbe bzw. eine andere Bilddichte aufweist als das Gesicht. Sobald solche sehr dominanten Schlagschatten auftreten, kann davon ausgegangen werden, dass mit großer Wahrscheinlichkeit ein Blitz bei der Aufnahme verwendet wurde.

Ein Anzeichen dafür, dass kein Blitz bei der Aufnahme verwendet wurde, ist es, wenn erkannt wird, dass es sich um ein sehr kontrastarmes Bild handelt. Ebenso deutet das Erkennen eines sog. Kunstlichtbildes, also eines Bildes, das die typischen Farben einer Glühlampenbeleuchtung oder Neonröhre aufweist, darauf hin, dass gar kein bzw. kein dominanter Blitz verwendet wurde. Auch die Analyse, die zur Feststellung erfolgt, ob Blitzlicht verwendet wurde, kann anhand von niedrig aufgelösten Daten vorgenommen werden.

Um die Sicherheit der Aussage über das Vorliegen einer Blitzaufnahme bzw. das Fehlen von Blitzlicht bei der Aufnahme des Bildes zu erhöhen, ist es vorteilhaft, verschiedene der hier angegebenen Kriterien zu überprüfen und die bei Überprüfung der einzelnen Kriterien gewonnenen Ergebnisse zu einem Gesamtergebnis und einer Aussage über das Verwenden von Blitzlicht zusammenzufassen. Um Rechenzeit zu sparen, ist es auch hier besonders vorteilhaft, die Kriterien parallel zu analysieren. Die Auswertung kann ebenfalls anhand von Wahrscheinlichkeiten oder über ein neuronales Netz erfolgen.

Ein weiteres, für das automatische Erkennen von rote-Augen-Defekten wichtiges, zu überprüfendes Ausschlusskriterien sind zusammenliegende Hauttöne. Obwohl es mit Sicherheit Bilder gibt, die keine zusammenliegenden Hauttöne aufweisen und dennoch rote-Augen-Defekte zeigen (z. B. die Aufnahme eines mit einer Faschingsmaske abgedeckten Gesichts), kann dieses Kriterium bei Inkaufnahme einiger Fehlentscheidungen als Ausschlusskriterium verwendet werden, um die Bilder einzuschränken, bei denen überhaupt nach rote-Augen-Defekten gesucht wird.

Falls die Überprüfung von Hauttönen als Ausschlusskriterium verwendet werden soll, bei dessen Fehlen rote-Augen-Defekte überhaupt nicht mehr gesucht werden, genügt es auch hier, die Prescandaten oder in ihrer Auflösung reduzierte, entsprechende Datensätze zu verwenden. Wenn keine Hauttöne in diesen sehr grob aufgelösten Daten auftreten, ist sicher keine große zusammenliegende Hauttonfläche in den Bilddaten vorhanden.

Besonders vorteilhaft ist es jedoch, dieses Kriterium ebenso wie andere in den Bilddaten zu überprüfen und es als eines von vielen Kriterien in eine Gesamtbewertung einfließen zu lassen. Damit würde gewährleistet, dass auch bei Faschingsbildern, bei Aufnahmen von Personen mit anderen Hauttönen oder bei sehr farbigen dominanten Beleuchtungen, bei denen die Hauttöne verändert werden, rote-Augen-Defekte in den Bildern gefunden werden können. Obwohl bei solchen Bildern das Anzeichen "Hautton" fehlt, könnten alle anderen überprüften Kriterien mit so großer Wahrscheinlichkeit bzw. so sicher ermittelt werden, dass die Gesamtbewertung ein Vorliegen von rote-Augen-Defekten feststellt bzw. nahelegt, obwohl keine Hauttöne vorhanden sind. Das im Stand der Technik beschriebene Verfahren würde dagegen beim Fehlen von Hauttönen das rote-Augen-Erkennungsverfahren abbrechen und evtl. zu einer Fehlentscheidung kommen.

Falls aber in einem Bild Hauttöne vorhanden sind, kann davon ausgegangen werden, dass es sich um eine Personenaufnahme handelt, bei der das Vorhandensein von rote-Augen-Defekten viel wahrscheinlicher ist als bei allen anderen Aufnahmen. Damit kann dieses Kriterium stark gewichtet werden. Insbesondere können zusammenliegende Hauttöne noch daraufhin untersucht werden, ob sie Charakteristiken eines Gesichts - wie dessen Form und Größe etc. - erfüllen, da sich mit der Wahrscheinlichkeit, dass es sich um ein Gesicht handelt, auch die Wahrscheinlichkeit für rote-Augen-Defekte erhöht. In diesem Fall kann das Kriterium noch aussagekräftiger sein.

Ein weiteres Ausschlusskriterium ist ein starkes Abfallen der Fouriertransformierten der Bilddaten, was auf das Fehlen jeglicher Detailinformationen im Bild - also ein völlig homogenes Bild - hindeutet. Auch alle anderen Kriterien, die zur rote-Augen-Erkennung verwendet werden, sich beliebig schnell überprüfen lassen und mit großer Sicherheit einen Ausschluss von Bildern ohne rote-Augen-Defekte bedingen. sind als Ausschlusskriterien verwendbar. So kann es auch ein Ausschlusskriterium sein, dass in der gesamten Bildinformation keine roten oder überhaupt keine Farbtöne vorkommen.

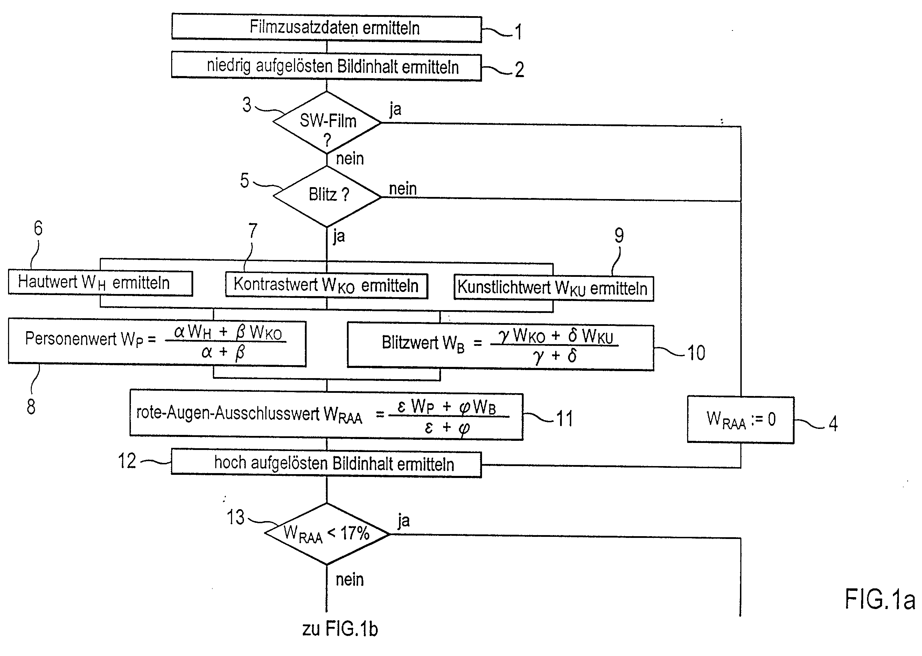

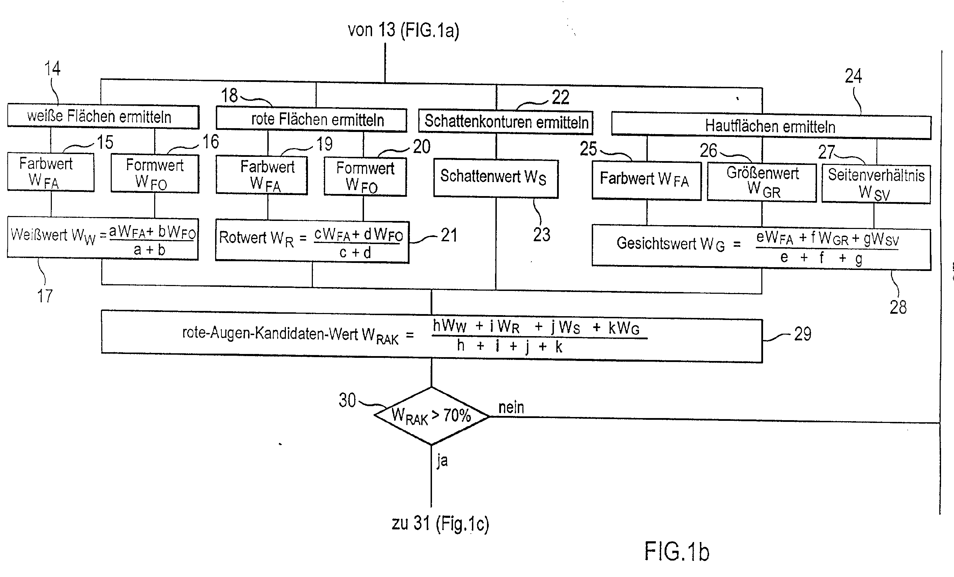

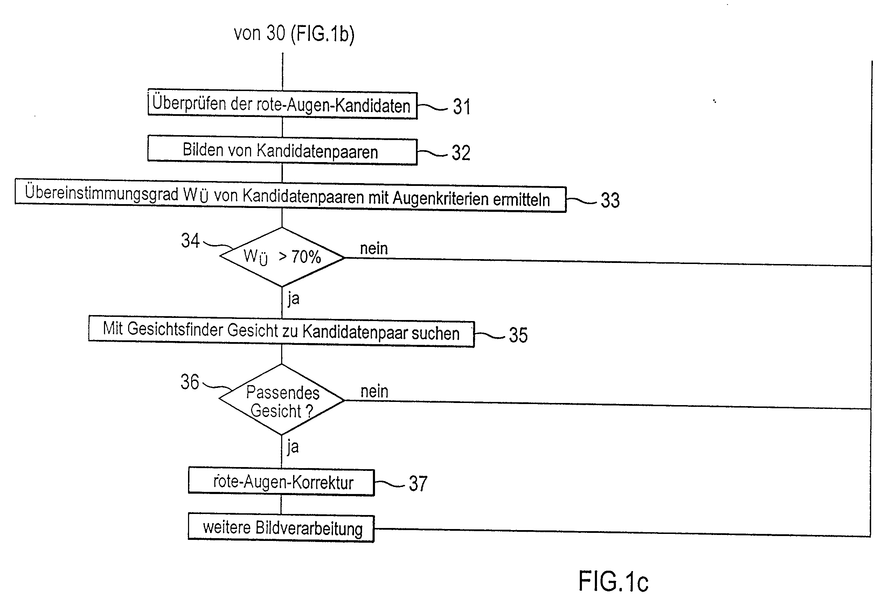

Weitere Einzelheiten und Vorteile der Erfindung ergben sich aus den Unteransprüchen im Zusammenhang mit der Beschreibung eines Ausführungsbeispiels, das anhand der Zeichnung eingehend erläutert wird.

Die einzige Figur zeigt ein Ablaufschema eines Ausführungsbeispiels des erfindungsgemäßen Verfahrens.

In der Figur wird anhand eines Flussdiagramms eine vorteilhafte Ausführungsform der Erfindung erläutert.

Um fotografische Bilddaten auf rote-Augen-Defekte hin untersuchen zu können, müssen die Bilddaten, wenn sie nicht ohnehin - z. B. von einer Digitalkameradigital vorliegen, zuerst an einer Abtasteinrichtung, einem sog. Scanner, ermittelt werden. Hierbei ist es in der Regel vorteilhaft, in einer niedrig aufgelösten Vorabtastung zuerst Filmzusatzdaten, wie beispielsweise den Magnetstreifen eines APS-Films, auszulesen und in einem groben Raster den Bildinhalt zu ermitteln. Für derartige Vorabtastungen werden in der Regel CCD-Zeilen verwendet, wobei die Filmzusatzdaten entweder mit derselben CCD-Zeile wie der Bildinhalt ausgelesen oder an einem eigenen Sensor erfasst werden. Die Filmzusatzdaten werden in einem Schritt 1 ermittelt, sie können aber auch parallel mit den nieder aufgelösten Bildinhaltsdaten erfasst werden, welche ansonsten in einem Schritt 2 ermittelt werden. Die nieder aufgelösten Bilddaten können auch dadurch gewonnen werden, dass der Film hoch aufgelöst abgetastet wird und dieser hoch aufgelöste Datensatz zu einem niedriger aufgelösten Datensatz zusammengefasst wird. Das Zusammenfassen kann beispielsweise dadurch geschehen, dass über eine bestimmte Datenanzahl der Mittelwert gebildet wird oder dadurch, dass nur jeder x-te hoch aufgelöste Bildpunkt für den nieder aufgelösten Bilddatensatz berücksichtigt wird. Anhand der Filmzusatzdaten wird dann in einem Schritt 3 bzw. im ersten Datenauswertschritt entschieden, ob es sich um einen Schwarzweißfilm handelt. Falls es sich um einen Schwarzweißfilm handelt, wird das rote-Augen-Erkennungsverfahren abgebrochen, der rote-Augen-Ausschlusswert W_{RAA} wird in einem Schritt 4 auf Null gesetzt, die hoch aufgelösten Bilddaten werden ermittelt, falls sie nicht aus einem digitalen Datensatz ohnehin vorliegen, und die Bearbeitung der hoch aufgelösten Bilddaten mittels weiterer vorgesehener Bildverarbeitungsverfahren wird fortgesetzt. Ebenso wird verfahren, wenn in einem Prüfschritt 5 festgestellt wird, dass in den Filmzusatzdaten ein Blitzmarker enthalten ist und dieser anzeigt, dass bei der Aufnahme des Bildes nicht geblitzt wurde. Sobald anhand eines derartigen Blitzmarkers festgestellt wurde, dass bei der Aufnahme kein Blitz verwendet wurde, können im Bilddatensatz keine roten-Augen-Defekte vorliegen. Deshalb wird auch hier der rote-Augen-Ausschlusswert W_{RAA} auf Null gesetzt, die hoch aufgelösten Bilddaten ermittelt und andere, weitere Bildverarbeitungsverfahren werden begonnen. Anhand der Ausschlusskriterien "Schwarzweißfilm" und "kein Blitz bei der Aufnahme", welche sich aus den Filmzusatzdaten ermitteln lassen, werden also von vornherein Bilder, welche mit Sicherheit keine roten Augen aufweisen können, von dem rote-Augen-Erkennungsverfahren ausgeschlossen. Durch das Verwenden derartiger Ausschlusskriterien kann viel Rechenzeit gespart werden, da auf die ausgeschlossenen Bilder das weitere, aufwändige rote-Augen-Erkennungsverfahren nicht mehr angewandt werden muss.

In den folgenden Schritten werden weitere Ausschlusskriterien überprüft, welche aus dem niedrig aufgelösten Bildinhalt abgeleitet werden können. So wird bei den verbleibenden Bildern aus deren nieder aufgelösten Bilddaten in einem Schritt 6 der Hautwert ermittelt. Hierfür werden in den Bilddaten in einem sehr groben Raster Hauttöne gesucht, welche ein Hinweis darauf sind, dass sich auf der Fotografie überhaupt Personen befinden. Als weiterer Hinweis hierfür zählt auch der in einem Schritt 7 ermittelte Kontrastwert. In einem sehr kontrastarmen Bild kann ebenfalls davon ausgegangen werden, dass keine Personen aufgenommen wurden. Es ist vorteilhaft, Hautwert und Kontrastwert in einem Schritt 8 zu einem Personenwert zusammenzufassen. Dabei ist es sinnvoll, eine Wichtung der Ausschlusswerte "Hautwert" und "Kontrastwert" vorzunehmen. So kann beispielsweise der Hautwert bei der Frage, ob Personen auf dem Bild vorhanden sind, ein größeres Gewicht haben als der Kontrastwert. Die richtige Wichtung läßt sich anhand der Überprüfung mehrerer Bilder herausfinden, bzw. sie kann auch durch eine Bearbeitung der Werte in einem neuronalen Netz erfolgen. Der Kontrastwert wird mit einem in Schritt 9 ermittelten Kunstlichtwert zusammengefasst, welcher darüber Aufschluss gibt, ob eine künstliche Beleuchtung - wie beispielsweise eine Glühbirne oder Neonröhre - im Bild dominiert hat, um eine Aussage darüber zu gewinnen, ob die Aufnahme der Bilddaten von einem Kamerablitz dominiert wurde. Dabei wird aus Kontrastwert und Kunstlichtwert der Blitzwert in Schritt 10 gebildet.

Sind Personen- und Blitzwert sehr gering, so kann davon ausgegangen werden, dass sich weder eine Person auf dem Bild befindet noch eine Blitzaufnahme gemacht wurde. Damit kann das Auftreten von rote-Augen-Defekten im Bild ausgeschlossen werden. Hierfür wird aus Personenwert und Blitzwert in einem Schritt 11 der rote-Augen-Ausschlusswert W_{RAA} gebildet. Es ist nicht zwingend notwendig, dass die Ausschlusskriterien "Personenwert" und "Blitzwert" zu einem einzigen Ausschlusswert zusammengefasst werden. Sie können ebenso als getrennte Ausschlusswerte betrachtet werden. Weiterhin ist vorstellbar, beliebige andere Ausschlusskriterien zu überprüfen, welche einen Hinweis darauf geben, dass keine rote-Augen-Defekte in den Bilddaten vorliegen können.

Wichtig bei der Wahl der Ausschlusskriterien ist es, darauf zu achten, dass die Überprüfung dieser Kriterien aufgrund der nieder aufgelösten Bilddaten möglich sein muss, da nur sinnvoll Rechenzeit gespart werden kann, wenn sehr wenige Bilddaten sehr schnell daraufhin untersucht werden können, ob ein rote-Augen-Erkennungsverfahren überhaupt angewandt werden soll oder solche Defekte von vornherein ausgeschlossen werden können. Würde die Überprüfung von Ausschlusskriterien an den hoch aufgelösten Bilddaten erfolgen, wäre die Einsparung der Rechenzeit nicht so groß, dass es sich lohnen würde, bereits vor dem Defekterkennungsverfahren zusätzlich Kriterien zu überprüfen. In diesem Fall wäre es sinnvoller, gleich bei allen Aufnahmen ein rote-Augen-Erkennungsverfahren durchzuführen. Werden hingegen die nieder aufgelösten Bildinhaltsdaten verwendet, um Ausschlusskriterien zu überprüfen, kann diese Überprüfung sehr schnell erfolgen, so dass viel Rechenzeit gespart wird, da nicht bei jedem Bild das aufwändige rote-Augen-Erkennungsverfahren anhand der hoch aufgelösten Daten vorgenommen werden muss.

Falls sie noch nicht digital vorliegen, müssen in einem Schritt 12 nunmehr von allen Bildern die Daten des hoch aufgelösten Bildinhalts ermittelt werden. Dies erfolgt bei fotografischen Filmen in der Regel durch Scannen mit einem hoch auflösenden Flächen-CCD. Es ist aber auch möglich, CCD-Zeilen zu verwenden oder entsprechende, in diesem Bereich gängige andere Sensoren.

Falls die Voranalyse ergeben hatte, dass der rote-Augen-Ausschlusswert sehr gering ist, wird davon ausgegangen, dass keine rote-Augen-Defekte auf dem Bild vorliegen können. Die weiteren Bildverarbeitungsverfahren wie beispielsweise Verschärfung oder Kontrastbearbeitung werden eingeleitet, ohne ein rote-Augen-Erkennungsverfahren an dem entsprechenden Bild vorzunehmen. Ergibt dagegen der Überprüfungsschritt 13, dass rote-Augen-Defekte nicht von vornherein ausgeschlossen werden können, so werden die hoch aufgelösten Bilddaten daraufhin überprüft, ob bestimmte Voraussetzungen oder Anzeichen für das Vorliegen von rote-Augen-Defekten vorhanden sind, es beginnt das eigentliche Defekt-Erkennungsverfahren.

Diese Voraussetzungen und/oder Anzeichen werden vorteilhafterweise unabhängig voneinander geprüft. Um Rechenzeit zu sparen, ist es besonders vorteilhaft, sie parallel zu prüfen. So werden in einem Schritt 14 die hoch aufgelösten Bilddaten daraufhin untersucht, ob in ihnen weiße Flächen zu finden sind. Zu derartigen weißen Flächen wird ein Farbwert W_{FA} in einem Schritt 15 ermittelt, der ein Maß dafür ist, wie reinweiß diese weißen Flächen sind. Außerdem wird in einem Schritt 16 ein Formwert W_{FO} ermittelt, welcher angibt, ob diese ermittelten weißen Flächen in etwa der Form eines abgebildeten Augapfels oder einem Lichtreflex in einem Auge entsprechen können oder nicht. Farbwert und Formwert werden in einem Schritt 17 zu einem Weißwert zusammengefasst, wobei auch eine Wichtung dieser Werte vorgenommen werden kann. Parallel dazu werden in einem Schritt 18 rote Flächen ermittelt, denen ebenfalls in den Schritten 19 und 20 Farb- und Formwert zugewiesen werden. Hieraus wird für die roten Flächen in einem Schritt 21 der Rotwert ermittelt. Der Formwert bei roten Flächen bezieht sich darauf, ob die Form der ermittelten roten Flächen in etwa der Form eines rote-Augen-Defekts entspricht.

In einem weiteren, parallel zu untersuchenden Schritt 22 werden Schattenkonturen in den Bilddaten ermittelt. Dies kann beispielsweise dadurch geschehen, dass nach parallel gleich verlaufenden Konturlinien gesucht wird, wobei eine dieser Linien hell, die andere aber dunkel ist. Derartige Doppelkonturlinien sind ein Anzeichen dafür, dass der Schattenwurf einer Lichtquelle vorliegt. Wenn die Hell-/Dunkeldifferenz besonders groß ist, kann davon ausgegangen werden, dass die den Schatten erzeugende Lichtquelle das Blitzlicht einer Kamera war. Damit gibt der diesen Sachverhalt widerspiegelnde Schattenwert, welcher in einem Schritt 23 ermittelt wird, Auskunft darüber, ob die Wahrscheinlichkeit für einen Blitz hoch ist oder nicht.

In einem weiteren Schritt 24 werden die Bilddaten auf das Auftreten von Hautflächen hin untersucht. Sobald Hautflächen gefunden werden, wird von diesen ein Farbwert - also ein Wert, der darüber Auskunft gibt, wie nahe die Farbe der Hautflächen an einer Hauttonfarbe liegt - in einem Schritt 25 ermittelt. In einem Schritt 26 wird parallel dazu ein Größenwert bestimmt, welcher ein Maß für die Größe der Hautflächen ist. Ebenso parallel dazu wird in einem Schritt 27 das Seitenverhältnis, also das Verhältnis von langer zu kurzer Seite der Hautfläche, ermittelt. Farbwert, Größenwert und Seitenverhältnis werden in einem Schritt 28 zu einem Gesichtswert zusammengefasst, welcher ein Maß dafür ist, inwieweit die ermittelte Hautfläche in Farbe, Größe und Form einem Gesicht ähnelt.

In einem Schritt 29 werden Weißwert, Rotwert, Schattenwert und Gesichtswert zu einem rote-Augen-Kandidatenwert W_{RAK} zusammengefasst. Dabei kann davon ausgegangen werden, dass beim Vorliegen von weißen Flächen, roten Flächen, Schattenkonturen und Hautflächen in digitalen Bilddaten die Wahrscheinlichkeit für das Vorliegen von roten Augen sehr groß ist und die ermittelten roten Flächen als rote-Augen-Kandidaten gewertet werden können, falls sie sich aufgrund ihrer Form dazu eignen. Bei der Bildung dieses rote-Augen-Kandidatenwerts können noch weitere Bedingungen über den Zusammenhang von Weißwert, Rotwert und Gesichtswert eingebracht werden. So kann beispielsweise ein Faktor eingeführt werden, der Aufschluss darüber gibt, ob rote und weiße Flächen nebeneinander liegen oder nicht. Ebenso kann berücksichtigt werden, ob rote und weiße Flächen innerhalb der ermittelten Hautfläche liegen oder weit entfernt von ihr. Diese Zusammenhangsfaktoren können in den rote-Augen-Kandidatenwert mit eingerechnet werden. Eine Alternative zur Ermittlung des rote-Augen-Kandidatenwerts ist es, Farbwerte, Formwerte, Schattenwert, Größenwert, Seitenverhältnis etc. gemeinsam mit Zusammenhangsfaktoren in ein neuronales Netz einzuspeisen und von diesem den rote-Augen-Kandidatenwert ausgeben zu lassen.

In einem Schritt 30 wird schließlich der ermittelte rote-Augen-Kandidatenwert mit einem Schwellwert verglichen. Falls der Wert die Schwelle überschreitet, wird davon ausgegangen, dass rote-Augen-Kandidaten im Bild vorliegen. In einem Schritt 31 wird überprüft, ob diese roten-Augen-Kandidaten tatsächlich rote-Augen-Defekte sein können. Hierbei können beispielsweise rote-Augen-Kandidaten und ihre Umgebung mit dem Dichteprofil von wirklichen Augen verglichen werden, um aufgrund von Ähnlichkeiten darauf zu schließen, dass die rote-Augen-Kandidaten sich tatsächlich innerhalb eines aufgenommenen Auges befinden.

Eine weitere Möglichkeit der Überprüfung der rote-Augen-Kandidaten ist es, jeweils zwei zusammenpassende Kandidaten mit annähernd gleichen Eigenschaften zu suchen, welche zu einem Augenpaar gehören. Dies kann in einem folgenden Schritt 32 oder auch alternativ zu Schritt 31 oder aber parallel dazu erfolgen. Falls dieser Überprüfungsschritt gewählt wird, werden nur rote-Augen-Defekte in frontal aufgenommenen Gesichtern erkannt. Profilaufnahmen mit nur einem roten Auge können davon nicht erfasst werden. Da rote-Augen-Defekte aber im allgemeinen bei Frontalaufnahmen auftreten, kann dieser Fehler in Kauf genommen werden, um Rechenzeit zu sparen. Falls zum Überprüfen die in den Schritten 31 und 32 vorgeschlagenen Kriterien betrachtet werden, wird anhand dieser Kriterien ein Schritt 33 der Übereinstimmungsgrad der gefundenen Kandidatenpaare mit Augenkriterien ermittelt. Im Schritt 34 wird der Übereinstimmungsgrad mit einem Schwellwert verglichen, um danach zu entscheiden, ob die rote-Augen-Kandidaten mit großer Wahrscheinlichkeit rote-Augen-Defekte sind oder nicht. Falls keine große Übereinstimmung festgestellt werden kann, muss davon ausgegangen werden, dass es sich um irgendwelche anderen roten Bildinhalte handelt, welche keinesfalls zu korrigieren sind. In diesem Fall wird die Bearbeitung des Bildes mit anderen Bildverarbeitungsalgorithmen fortgesetzt, ohne eine rote-Augen-Korrektur vorzunehmen.

Falls der Übereinstimmungsgrad der Kandidaten mit Augenkriterien jedoch relativ groß ist, wird in einem weiteren Schritt 35 ein Gesichtserkennungsverfahren auf die digitalen Bilddaten angewandt, welches ein zu dem Kandidatenpaar passendes Gesicht suchen soll. Eine Paarbildung aus den Kandidaten hat dabei den Vorteil, dass die Orientierung eines möglichen Gesichts schon vorgegeben ist. Nachteilig ist - wie bereits erwähnt - dass rote-Augen-Defekte in Profilaufnahmen nicht erkannt werden. Falls dieser Fehler nicht in Kauf genommen werden soll, ist es jedoch auch möglich, zu jedem rote-Augen-Kandidaten ein Gesichtserkennungsverfahren zu starten und ein zu diesem Kandidaten möglicherweise passendes Gesicht zu suchen. Dies erfordert mehr Rechenzeit, führt aber zu einem sichereren Ergebnis. Falls in einem Schritt 36 kein zu rote-Augen-Kandidaten passendes Gesicht gefunden wird, muss davon ausgegangen werden, dass es sich bei den rote-Augen-Kandidaten nicht um Defekte handelt, das rote-Augen-Korrekturverfahren wird nicht angewandt, sondern weitere Bildverarbeitungsalgorithmen werden gestartet. Falls jedoch ein zu den rote-Augen-Kandidaten passendes Gesicht ermittelt werden kann, kann davon ausgegangen werden, dass es sich bei den rote-Augen-Kandidaten tatsächlich um Defekte handelt, und diese werden in einem Korrekturschritt 37 mit einem gängigen Korrekturverfahren korrigiert. Als zur Überprüfung von rote-Augen-Kandidaten geeignetes Gesichtserkennungsverfahren können mit Dichteverläufen arbeitende Verfahren verwendet werden, wie sie im Gebiet der Echtzeit-Personenüberwachung oder ―Identitätskontrolle üblich sind. Prinzipiell ist es aber auch möglich, einfachere Verfahren wie Hauttonerkennung und Ellipsenfit zu verwenden. Diese sind jedoch fehleranfälliger.

## Patentansprüche

1. Verfahren zur Verarbeitung digitaler, fotografischer Bilddaten, wobei auf die Bilddaten ein Verfahren zum automatischen Erkennen von rote-Augen-Defekten angewandt wird, **dadurch gekennzeichnet, dass** vor Anwendung des Verfahrens zum Erkennen roter-Augen-Defekte in Rahmen eines Ausschlussverfahrens Ausschlusskriterien überprüft werden, anhand derer das Auftreten von rote-Augen-Defekte definitiv ausgeschlossen wird.

2. Verfahren nach Anspruch 1, **dadurch gekennzeichnet, dass** Ausschlusskriterien anhand der Filmzusatzdaten überprüft werden.

3. Verfahren nach Anspruch 2, **dadurch gekennzeichnet, dass** anhand des Blitzmarkers der Aufnahmedaten erkannt wird, dass bei der Aufnahme kein Blitz verwendet wurde.

4. Verfahren nach Anspruch 2, **dadurch gekennzeichnet, dass** ein Ausschlusskriterium das Vorliegen eines Schwarzweiß-Bildes ist.

5. Verfahren nach Anspruch 1, **dadurch gekennzeichnet, dass** Ausschlusskriterien anhand eines Bilddatensatzes überprüft werden, der gegenüber dem zum Erkennen roter-Augen-Defekte verwendeten reduziert ist.

6. Verfahren nach Anspruch 5, **dadurch gekennzeichnet, dass** ein Datensatz in niedrigerer Auflösung verwendet wird.

7. Verfahren nach Anspruch 6, **dadurch gekennzeichnet, dass** ein die Bilddaten enthaltender Film in niedrigerer Auflösung vorabgetastet wird.

8. Verfahren nach Anspruch 6, **dadurch gekennzeichnet, dass** die digital vorliegenden Bilddaten in ihrer Auflösung reduziert werden.

9. Verfahren nach Anspruch 5, **dadurch gekennzeichnet, dass** die Datenreduktion darin besteht, ein Graustufenbild der Bilddaten zu bilden.

10. Verfahren nach einem der vorhergehenden Ansprüche, **dadurch gekennzeichnet, dass** mehrere Ausschlusskriterien unabhängig voneinander überprüft werden.

11. Verfahren nach Anspruch 10, **dadurch gekennzeichnet, dass** mehrere Ausschlusskriterien parallel überprüft werden.

12. Verfahren nach Anspruch 9 oder 10, **dadurch gekennzeichnet, dass** die Ergebnisse der Überprüfungen mehrerer Kriterien zu einer Gesamtbewertung zusammengefasst werden.

13. Verfahren nach einem der vorhergehenden Ansprüche, **dadurch gekennzeichnet, dass** ein Ausschlusskriterium Blitzlicht ist, insbesondere das Vorliegen einer Aufnahme, bei der die dominante Lichtquelle bei der Aufnahme eine andere als der Kamerablitz war.

14. Verfahren nach Anspruch 13, **dadurch gekennzeichnet, dass** durch das Erkennen einer Kunstlichtaufnahme festgestellt wird, dass die Kunstlichtquelle die dominante Lichtquelle bei der Aufnahme war.

15. Verfahren nach Anspruch 13, **dadurch gekennzeichnet, dass** durch das Erkennen einer kontrastarmen Aufnahme festgestellt wird, dass kein Blitz verwendet wurde.

16. Verfahren nach einem der vorhergehenden Ansprüche, **dadurch gekennzeichnet, dass** ein Ausschlusskriterium das starke Abfallen der Fouriertransformierten der Bilddaten ist.

17. Verfahren nach einem der vorhergehenden Ansprüche, **dadurch gekennzeichnet, dass** ein Ausschlusskriterium das Fehlen großer Hauttonflächen ist.
